Europäisches Patentamt

(19) European Patent Office

Office européen des brevets

(11) Veröffentlichungsnummer: **0 043 119**
**B1**

(12) **EUROPÄISCHE PATENTSCHRIFT**

(45) Veröffentlichungstag der Patentschrift:
22.08.84

(21) Anmeldenummer: 81104961.8

(22) Anmeldetag: **26.06.81**

(51) Int. Cl.³: **D 21 G 1/02,** D 21 G 1/00,
F 16 C 13/00, F 16 C 13/02

(54) **Presswalze, deren Durchbiegung einstellbar ist.**

**Verbunden mit 81901918.3 (europäische Anmeldenummer) durch Entscheidung vom 04.11.82.**

(30) Priorität: **28.06.80 DE 3024575**
**24.12.80 DE 3049080**

(43) Veröffentlichungstag der Anmeldung:
**06.01.82 Patentblatt 82/1**

(45) Bekanntmachung des Hinweises auf die Patenterteilung:
**22.08.84 Patentblatt 84/34**

(84) Benannte Vertragsstaaten:
**AT BE CH DE FR GB IT LI NL SE**

(56) Entgegenhaltungen:
**DE - A - 1 575 435**
**DE - A - 2 325 721**
**DE - A - 2 507 677**
**DE - A - 2 832 457**
**FR - A - 2 360 713**
**FR - A - 2 452 545**
**US - A - 2 889 334**

(73) Patentinhaber: **J.M. Voith GmbH, Postfach 1940,**
**D-7920 Heidenheim (DE)**

(72) Erfinder: **Schiel, Christian, Albrecht-Dürer-Strasse 90,**
**D-7920 Heidenheim (DE)**
Erfinder: **Wolf, Robert, Elchweg 18,**
**D-7922 Herbrechtingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Presswalze, deren Durchbiegung einstellbar ist, insbesondere für die Papierindustrie, mit einem hohlen Walzenmantel, der um einen feststehenden Biegeträger (Joch) rotierbar ist und der mit einer Gegenwalze einen von einer Bahn durchlaufenen Pressspalt bilden kann, wobei die Drehachse der beiden Walzen und der Pressspalt in einer Pressebene liegen, ferner mit den folgenden Merkmalen:

a) der Walzenmantel ist an seinen beiden Enden durch je ein Pendellager wenigstens mittelbar gegen das Joch abgestützt;

b) im Bereich des Pressspaltes befindet sich im Walzenmantel eine hydraulische Stützeinrichtung, die in der Pressebene Stützkräfte vom Joch auf den Walzenmantel überträgt;

c) das Joch ruht an seinen beiden Enden mit je einer Abstützfläche unmittelbar auf zwei Abstützböcken;

d) im Längsschnitt gesehen ist die Entfernung zwischen den zur Walzendrehachse senkrechten Mittelebenen der Abstützflächen des Jochs wenigstens angenähert gleich gross wie die Entfernung zwischen den Lagern der Gegenwalze.

Presswalzen der vorgenannten Gattung und Presswalzen ähnlicher Bauart sind bekannt aus den folgenden Druckschriften:

1. Zeitschrift «Das Papier» 1980, Heft 5, Seiten 165-171,
2. DE-AS 24 07 510,
3. US-PS 3 119 324,
4. DE-OS 25 03 051,
5. US-PS 3 276 102,
6. DE-AS 24 18 431,
7. US-PS 3 766 620,
8. DE-AS- 28 26 316.

Bei den Presswalzen, die aus den Druckschriften 1 und 2 bekannt sind, ist der Walzenmantel der Presswalze etwa gleich lang wie der Walzenmantel der Gegenwalze. Der Walzenmantel ist an seinen beiden Enden mit Hilfe je eines Pendellagers unmittelbar auf dem Joch gelagert. Dadurch ist, im Längsschnitt gesehen, die Entfernung zwischen den (zur Walzendrehachse senkrechten) Mittelebenen der Pendellager beträchtlich kleiner als die Entfernung zwischen den Mittelebenen der Lager der Gegenwalze.

Die bekannte Presswalze gemäss Druckschrift 1 (insbesondere Seite 169, Abb. 1) ist eine sogenannte «Schwimmende Walze». Dort ist die hydraulische Stützeinrichtung als eine halbringförmige, zwischen Joch und Walzenmantel befindliche Druckkammer ausgebildet, die sich im wesentlichen über die ganze Länge des Walzenmantels erstreckt. Dagegen weist die aus der Druckschrift 2 bekannte Presswalze eine gewisse Anzahl von hydrostatischen Druckschuhen auf, die entlang dem Pressspalt über die Länge des Walzenmantels verteilt sind.

Solche Presswalzen werden beispielsweise im Nassteil von Papiermaschinen verwendet (als Entwässerungspressen) oder zur Glättung des getrockneten Papiers, z.B. in Kalandern. Insbesondere in dem zuletzt genannten Anwendungsfall ist eine äusserst präzise Passform zwischen der Presswalze und der Gegenwalze erforderlich, damit die Dicke des Papiers über die Papierbahnbreite gleichmässig wird. Dadurch soll erreicht werden, dass beim Aufrollen der Papierbahn ein Wickel entsteht, dessen Form möglichst genau zylindrisch ist. Wenn nämlich die Passform zwischen den Walzen ungenau ist, dann entstehen beim Aufrollen der Papierbahn ungleichförmige Wickel, die sich nur schlecht weiterverarbeiten lassen und zu Ausschuss führen.

Bei der Behandlung einer Papierbahn in einer solchen Walzenpresse kann es auch erwünscht sein, auf die Randbereiche der Papierbahn einerseits und auf den Mittelbereich andererseits unterschiedliche Presskräfte auszuüben. Dadurch versucht man, Ungleichförmigkeiten der Papierdicke zu beseitigen, die an anderen Stellen der Papiermaschine verursacht worden sein können (Beispiele: ungleiches Flächengewicht über der Breite der Papierbahn, verursacht im Nassteil der Papiermaschine; oder ungleiche Feuchtigkeit eines Filzes; oder ungleicher Trockengehalt über der Breite der Papierbahn vor einem Glättwerk). Die bekannten Walzenpressen, die eine Presswalze mit einstellbarer Durchbiegung und eine massive Gegenwalze aufweisen, haben den Nachteil, dass die gewünschte Gleichförmigkeit der Dicke der behandelten Materialbahn häufig noch nicht erreicht werden kann. Es entstehen immer wieder Abweichungen, die je nach Höhe der Presskraft verschieden gross sein können und die anscheinend darauf beruhen, dass die Entfernung zwischen den Lagern bei der Gegenwalze grösser ist als beim Walzenmantel der Presswalze.

Der vorbeschriebene Nachteil haftet allen bekannten Bauarten an, gleichgültig ob es sich um eine «Schwimmende Walze» (Druckschrift 1, Seite 169, Abb. 1) oder um eine Presswalze gemäss Druckschrift 2 handelt.

Zwar ist es aus der Druckschrift 1 bekannt, mit Hilfe einer Korrekturkammer und mit Hilfe von sogenannten Ringelementen, deren Innenraum drucklos ist, die bisher beobachteten Ungleichförmigkeiten in der Bahndicke zu verringern. Jedoch ist die Bauform der Walzenpressen im Prinzip unverändert geblieben. Dadurch ist es dort nicht gelungen, die Ursache für die Ungleichförmigkeiten von Grund auf zu beseitigen.

Aus den Druckschriften 3 und 4 sind Presswalzen bekannt, deren Walzenmantel an seinen beiden Enden Verlängerungen aufweist, an denen die Lager für den Walzenmantel angeordnet sind. Dadurch ist die Entfernung zwischen den Walzenmantellagern grösser als in den Konstruktionen gemäss den Druckschriften 1 und 2. Jedoch ist dort dementsprechend auch die Länge des Jochs vergrössert worden. Insbesondere ist der Abstand zwischen den Mittelebenen der Abstützflächen des Jochs grösser als in den Konstruktionen gemäss den Druckschriften 1 und 2, jedenfalls beträchtlich grösser als die Entfernung zwischen den Lagern der Gegenwalze. Dies hat verschiedene Nachteile: Zum einen treten Biegemomente in den Maschinengestellen auf, welche die Presswalze und die Gegenwalze tragen. Besonders gravierend ist, dass das Biegemoment in der Mitte des Jochs wesentlich höher wird als bisher, so dass der Jochdurchmesser vergrössert werden muss, wenn gleiche Stützkräfte wie bisher vom Joch auf den Walzenmantel übertragen werden sollen. Dadurch wird die gesamte Presswalze grösser, schwerer und teurer.

Eine andere Presswalze mit verlängertem Walzenmantel ist bekannt aus der Druckschrift 5, Figur 9. Dort ruht das Joch nicht unmittelbar auf Abstützböcken, sondern mittels zusätzlicher Wälzlager auf der Innenseite des Walzenmantels. Dadurch wird man aber gezwungen, die Lager für den Walzenmantel beträchtlich zu vergrössern; denn diese müssen nunmehr sowohl die Stützkräfte für den Walzenmantel als auch die Stützkräfte für das Joch auf die Abstützböcke und das Maschinengestell übertragen.

Der Erfindung liegt die Aufgabe zugrunde, eine Presswalze, deren Durchbiegung einstellbar ist, derart zu gestalten, dass sie beim Anpressen an die Gegenwalze zusammen mit dieser eine fehlerfreie Passform bilden kann, ohne dass die Entfernung zwischen den Stützflächen des Jochs in nennenswertem Masse grösser als die Entfernung zwischen den Lagern der Gegenwalze ist. Darüber hinaus soll die Möglichkeit geschaffen werden, dass bei Bedarf Einrichtungen zum Aufbringen einer willkürlichen Zusatzdurchbiegung der Enden des Walzenmantels in der Presswalze untergebracht werden können, ohne dass sich hierdurch deren Hauptabmessungen vergrössern. Schliesslich soll es möglich sein, die erfindungsgemässe Presswalze bei Bedarf mit einer einfachen Antriebseinrichtung auszustatten.

Die zuvor angegebene Aufgabe wird gemäss der Erfindung durch eine Presswalze mit den Merkmalen des Patentanspruches 1 gelöst. Wesentlich ist hierbei, dass die Abstützböcke Kragstücke aufweisen, die sich in das Innere des Walzenmantels hinein erstrecken, und dass an diesen Kragstücken die Abstützflächen für das Joch vorgesehen werden. Die Erfinder haben nämlich erkannt, dass diese Anordnung die entscheidende Voraussetzung dafür ist, dass man die Entfernung zwischen den Pendellagern des Walzenmantels gleich (oder wenigstens angenähert gleich) der Entfernung zwischen den Lagern der Gegenwalze machen kann ohne dass die Entfernung zwischen den Abstützflächen für das Joch vergrössert werden muss oder ohne dass man auf die Abstützung des Jochs unmittelbar an den Abstützböcken verzichten muss. Gemäss der Erfindung werden also die Abstützflächen für das Joch und die Pendellager für den Walzenmantel «ineinander geschachtelt», jedoch in einer anderen Weise als es aus der Druckschrift 5 bekannt ist und ohne dass die oben angegebenen Nachteile jener bekannten Konstruktion auftreten. Insbesondere können solche Pendellager für den Walzenmantel verwendet werden, deren Abmessungen in den üblichen Grenzen verbleiben.

Gegenüber den aus den Druckschriften 1 und 2 bekannten Presswalzen weist der Walzenmantel eine grössere Länge auf, so dass bei Bedarf an den Enden des Walzenmantels zusätzliche hydraulische Stützeinrichtungen vorgesehen werden können. Dies wird weiter unten im einzelnen erläutert. Ausserdem bietet die erfindungsgemässe Konstruktion die Voraussetzung für einen einfachen und dennoch kinematisch einwandfreien Zahnradantrieb für den Walzenmantel. Auch dies wird im einzelnen weiter unten beschrieben.

Der wichtigste Vorteil der Erfindung besteht darin, dass man die Entfernung zwischen den Pendellagern des Walzenmantels etwa gleich gross machen kann wie die Entfernung zwischen den Lagern der Gegenwalze, ohne dass die Gesamtlänge der Presswalze (insbesondere am Joch) vergrössert werden muss, und dass man hierdurch beim Anpressen der Presswalze an die Gegenwalze eine fehlerfreie Passform zwischen den beiden Walzen erreichen kann.

Die eingangs genannte Druckschrift 6 zeigt eine von der erfindungsgemässen Presswalze grundsätzlich abweichende Bauform. Dort ruht das Joch nicht in einem Abstützbock, sondern über glockenförmigen Endteilen und mittels zusätzlicher Wälzlager auf den Enden des Walzenmantels. Somit müssen die das Joch tragenden Stützkräfte über die vorgenannten Teile und über die Pendellager des Walzenmantels auf ein Gestell, Abstützböcke oder dergleichen übertragen werden. Dabei müssen aber die Pendellager zusätzlich noch die den Walzenmantel tragenden Stützkräfte übertragen. Diese bekannte Konstruktion hat also, ähnlich wie die Presswalze gemäss Druckschrift 5, den Nachteil, dass nicht nur die Zahl der Wälzlager grösser ist, sondern dass auch noch die Pendellager des Walzenmantels stärker dimensioniert werden müssen. Zusätzlich besteht ein Nachteil darin, dass die das Joch tragenden und an den Enden des Walzenmantels angreifenden Stützkräfte ausserordentlich störend wirken, wenn man mit Hilfe der hydraulischen Stützeinrichtung eine bestimmte Biegelinie des Walzenmantels erzeugen will. Mit anderen Worten: Es ist unmöglich, eine präzise Passform zwischen dem Walzenmantel und der Gegenwalze zu erzielen.

Weil sich das Joch beim Betrieb der Presswalze durchbiegt, werden die Abstützflächen für das Joch vorzugsweise kugelig ausgebildet, wie an sich bekannt. Ausserdem wird man die Konstruktion im allgemeinen derart wählen, dass im unbelasteten Zustand der Presswalze das Joch koaxial zum Walzenmantel liegt. In diesem Falle haben an jedem Walzenende die kugelige Abstützfläche für das Joch und das Pendellager des Walzenmantels denselben Mittelpunkt. Mit anderen Worten: Die beiden Mittelpunkte fallen zusammen. Man kann hiervon jedoch auch wie folgt abweichen: Der Mittelpunkt der kugeligen Abstützfläche für das Joch kann gegenüber dem Mittelpunkt des Walzenmantel-Pendellagers versetzt sein, und zwar in radialer Richtung zur Gegenwalze hin. Dadurch kann — bei ansonsten gleichen Abmessungen — eine grössere Durchbiegung des Jochs zugelassen werden.

In beiden Fällen besteht ein wesentlicher Vorteil darin, dass — in einem Längsschnitt gesehen — an jedem Walzenende die vom Joch und die vom Walzenmantel in den Abstützbock eingeleiteten Stützkräfte in der gleichen Wirklinie liegen. Wenn man auch noch die Mitte der Auflagefläche des Abstützbockes auf dem Maschinengestell in dieser Wirklinie anordnet, dann wirkt kein Biegemoment zwischen dem Abstützbock und dem Maschinengestell.

Eine andere Lösung der der Erfindung zugrundeliegenden Aufgabe ist in Anspruch 2 angegeben. Dieser

besagt mit anderen Worten, dass die Entfernung zwischen den beiden Abstützflächen des Jochs kleiner ist als die Entfernung zwischen den Walzenmantel-Pendellagern. Hierbei müssen zwar gewisse Biegemomente in Kauf genommen werden. Jedoch erzielt man in anderer Hinsicht Vorteile: Einerseits verringert sich hierdurch die Durchbiegung des Jochs (gleicher Joch-Durchmesser und gleiche Belastung vorausgesetzt). Aufgrund der geringeren Durchbiegung des Jochs kann die lichte Weite des Walzenmantels und damit auch sein Aussendurchmesser verkleinert werden. Andererseits wird unter gleichbleibender Belastung auch die Spannung im Joch geringer. Dadurch kann man auf weniger hochfeste Werkstoffe für das Joch übergehen, oder man kann den Jochdurchmesser verkleinern, wodurch wiederum eine Möglichkeit gegeben ist, den Walzendurchmesser zu verkleinern. In jedem Falle kann man die Herstellungskosten der Presswalze durch die genannte Massnahme verringern.

Ein besonders wichtiger weiterführender Gedanke der Erfindung befasst sich mit der Gestaltung eines Zahnrad-Antriebs für den Walzenmantel. Die wesentlichen Merkmale dieses Antriebs sind in den Ansprüchen 7 und 8 angegeben. Der Anspruch 7 besagt mit anderen Worten: In einem Längsschnitt durch die Presswalze gesehen ist ein Aussen-Zahnkranz derart angeordnet, dass seine zur Walzendrehachse senkrechte Mittelebene wenigstens angenähert mit der Mittelebene des Walzenmantel-Pendellagers zusammenfällt. Aus der eingangs genannten Druckschrift 7 ist eine Antriebsvorrichtung für eine Presswalze bekannt, die in wesentlichen Details von der erfindungsgemässen Bauweise abweicht. Zwar ist dort ebenfalls am Walzenmantel ein Aussenzahnkranz vorgesehen, mit dem ein pendelnd einstellbares Antriebsritzel kämmt. Jedoch ist dort der Aussenzahnkranz gegenüber dem Walzenmantel-Pendellager in Achsrichtung versetzt. Dies hat zur Folge, dass die Zahnkraft im Walzenmantel ein Biegemoment erzeugt. Ein weiterer Unterschied liegt in der Lagerung des Antriebsritzels. Dieses ist in einem vom Abstützbock separaten Getriebegehäuse starr gelagert. Das Getriebegehäuse selbst ist mit Hilfe eines zusätzlichen Wälzlagers im Inneren des Walzenmantels gelagert. Dadurch folgt das Getriebegehäuse zusammen mit dem Antriebsritzel einer eventuellen Neigung des Walzenmantels, wenn dieser sich durchbiegt. Ein Nachteil dieser bekannten Konstruktion ist, dass neben dem Abstützbock, in dem das Joch ruht, ein zusätzliches Getriebegehäuse und ein zusätzliches Lager benötigt werden. Ausserdem muss wegen des Antriebs das Joch verlängert werden, und der das Joch tragende Abstützbock muss weiter nach aussen gesetzt werden, verglichen mit einer Walze, die keinen Antrieb aufweist. Daraus resultieren weitere Nachteile; insbesondere erhöht sich die Durchbiegung des Jochs, wenn dessen Querschnitts-Abmessungen und die Belastung unverändert bleiben.

Ein weiterer Gedanke der Erfindung betrifft Massnahmen, durch die man die Enden des Walzenmantels bei Bedarf abweichend von der normalen Biegelinie willkürlich ausbiegen kann. Hierzu werden gemäss den Ansprüchen 9 bis 14 in den Endbereichen des Walzenmantels zwischen den Walzenmantel-Pendellagern und der bisher schon vorhandenen hydraulischen Stützeinrichtung (nachfolgend «Hauptstützeinrichtung» genannt) zusätzliche hydraulische Stützeinrichtungen vorgesehen. Dabei spielen die Walzenmantel-Pendellager eine grosse Rolle, weil sie die Mantelenden so festhalten, dass diese nicht ausweichen können. Durch entsprechende Druckverteilung in den zusätzlichen Stützeinrichtungen, welche in oder gegen die Anpressrichtung wirkend angeordnet werden können, sind folgende Verformungen der Biegelinie möglich:

1. Die Zusatz-Stützeinrichtungen sind nicht beaufschlagt. Der Walzenmantel biegt sich nach der normalen Biegelinie. Jedoch kann durch Änderung des Druckes in der Hauptstützeinrichtung entweder genau gleichmässig oder stärker in der Mitte oder stärker an den Rändern gepresst werden.

2. Man lässt die Zusatz-Stützeinrichtungen entgegen der Anpressrichtung wirken und erhöht geringfügig den Druck in der Hauptstützeinrichtung. Resultat: Gleich grosse Pressung über einen breiten Mittelbereich, höhere Pressung an den Rändern. Erhöht man hierbei den Druck in der Hauptstützeinrichtung noch weiter, dann erhält man ein ebenes Anpressprofil in den Randbereichen und eine Druckspitze in der Mitte.

3. Man lässt die Zusatz-Stützeinrichtungen in der Anpressrichtung wirken und reduziert ein wenig den Druck in der Hauptstützeinrichtung. Resultat: Gleich grosse Pressung über einen breiten Mittelbereich, Pressung an den Rändern reduziert. Verringert man hierbei den Druck in der Hauptstützeinrichtung noch weiter, dann erhält man ein ebenes Anpressprofil in den Randbereichen und einen reduzierten Druck in der Mitte.

Die Einstellung der Zusatz-Stützeinrichtungen kann bei Bedarf an den beiden Walzenenden verschieden stark erfolgen. Ausserdem kann die Hauptstützeinrichtung in mehrere, individuell einstellbare Abschnitte unterteilt sein.

Gegenüber den konventionellen Presswalzen mit einstellbarer Durchbiegung ist gemäss der Erfindung eine stärkere Walzenmanteldurchbiegung mit geringeren Kräften möglich. Denn durch die Vergrösserung der Entfernung zwischen den Pendellagern des Walzenmantels sind auch die Entfernungen zwischen den Pendellagern und der Zusatz-Stützeinrichtungen und damit die wirksamen Hebelarme zur Erzeugung der Biegemomente beträchtlich grösser geworden. Die Belastung der Pendellager ist durch diese Vergrösserung des Habelarmes reduziert.

Ausgestaltung der hydraulischen Stützeinrichtungen:

Die Haupt-Stützeinrichtung im Mittelbereich kann entweder in Form einer Vielzahl hydrostatischer Druckschuhe ausgeführt werden, ober aber (nach Art der eingangs genannten «Schwimmenden Walze») als eine durchgehende halbringförmige Druckkammer, welche mit Niederdrucköl gefüllt und durch elastische Längs- und Umfangs-Dichtleisten begrenzt ist. Letztere Ausführung hat den Vorteil, dass das Joch nicht durch Bohrungen zur Aufnahme der hydrostatischen Druckschuhe geschwächt wird und darum im Durchmesser kleiner werden kann, wodurch auch der Mantel der Walze und deren Gewicht und die Herstellkosten verringert werden.

Unabhängig von der Gestaltung der Hauptstützeinrichtung können auch die Zusatz-Stützeinrichtungen entweder als hydrostatische Druckschuhe oder als halbringförmige Druckkammern ausgebildet sein.

Ausführungsbeispiele der Erfindung werden nachfolgend anhand der Zeichnungen mit Figuren 1 bis 4 näher erläutert. Darin zeigt jede der vier Figuren einen Teilschnitt durch eines der beiden Enden einer Presswalze und schematisch den dazugehörenden Teil der Gegenwalze.

Fig. 1 zeigt eine Ausführungsform ohne Antrieb, bei der das Pendellager für den Walzenmantel ausserhalb desselben angeordnet ist;

Fig. 2 zeigt eine andere Ausführungsform, ebenfalls ohne Antrieb, bei der das Pendellager für den Walzenmantel in dessen Innerem angeordnet ist;

Fig. 3 zeigt eine Weiterbildung der Ausführungsform von Fig. 2 mit Antrieb;

Fig. 4 zeigt eine andere Ausführungsform.

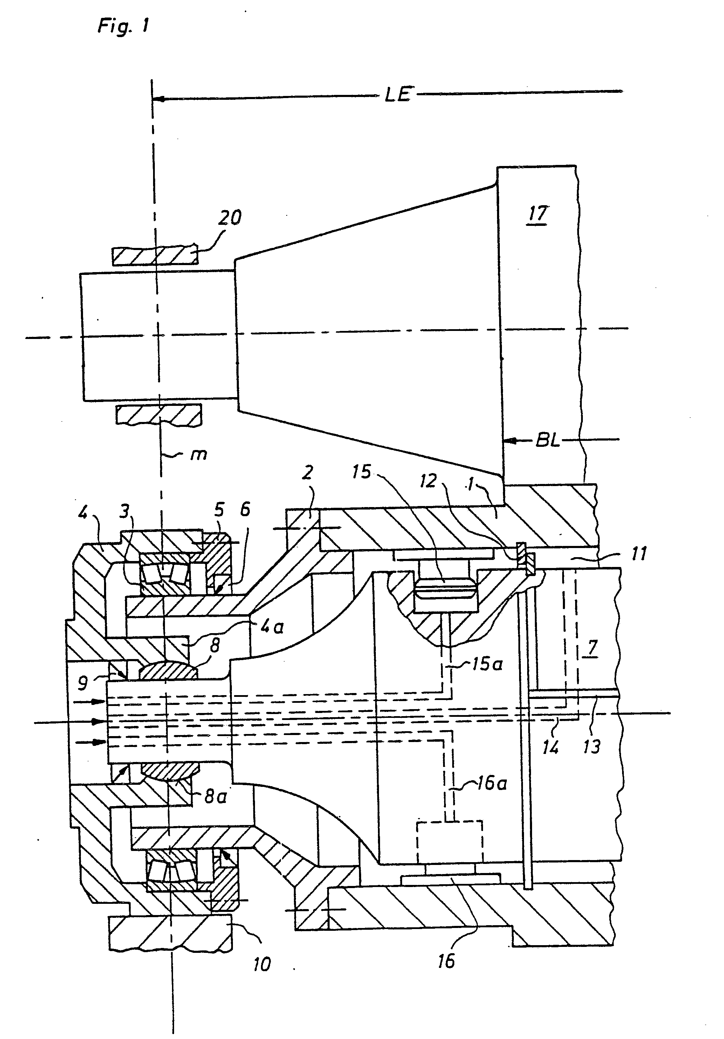

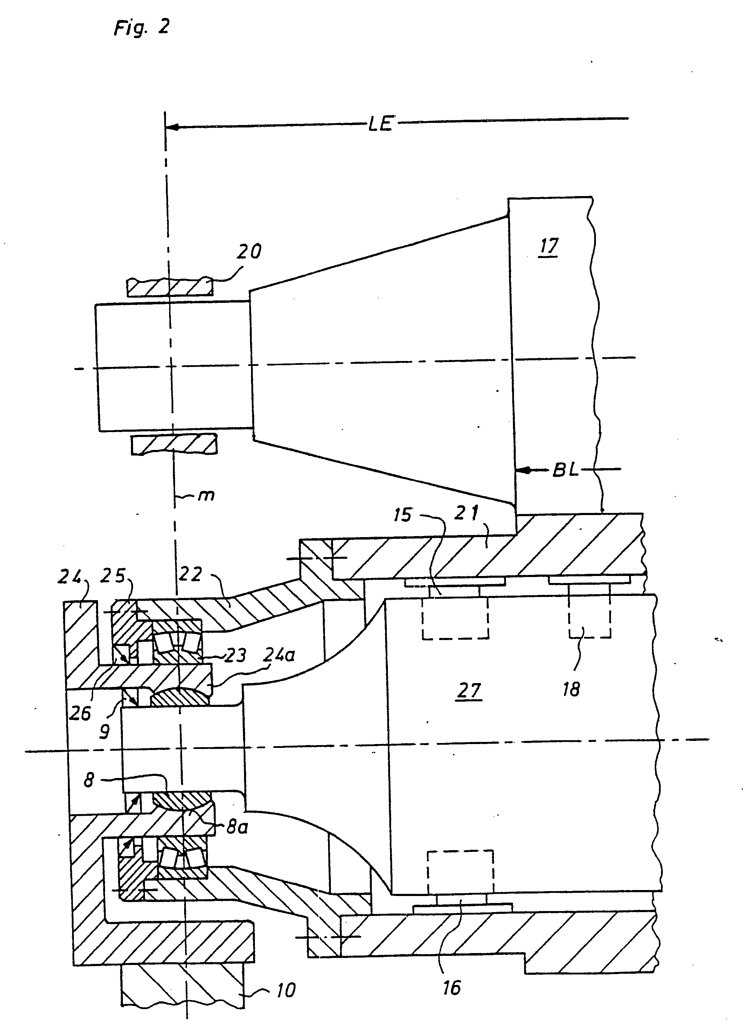

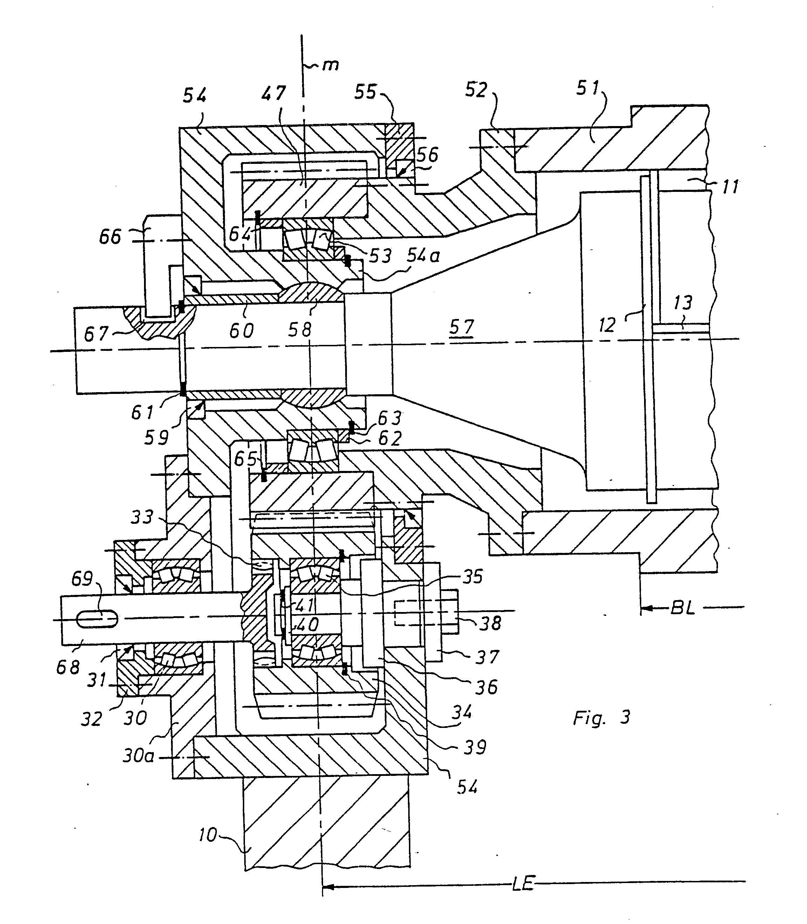

Jede Walze hat an dem einen Ende ein Loslager, wie z.B. in den Fig. 1 und 2 dargestellt und am anderen Ende ein Festlager, entsprechend Fig. 3. Am Festlagerende sind sowohl das Joch 57 als auch der Walzenmantel 51, 52, 47, axial gegen das Gestell 10 unverschieblich festgelegt, während am Loslagerende eine axiale Verschiebung des Jochs 7; 27 und des Walzenmantels 1, 2; 21, 22 gegenüber dem Gestell 10 erfolgen kann. Ausser den Mitteln zur axialen Festlegung unterscheidet sich die Lagerung auf der Festlagerseite nicht von jener auf der Loslagerseite.

Gemäss Fig. 1 hat der rotierbare Walzenmantel 1 eine Verlängerung in Form einer angeflanschten Lagerhülse 2. Diese ist über das Pendellager 3 mit dem Abstützbock 4 verbunden, der zugleich als Lagergehäuse dient. Dessen Innenraum ist nach aussen durch einen Deckel 5 mit Lippendichtung 6 abgedichtet. Der Abstützbock 4 hat ein rohrförmiges Kragstück 4a, das sich in das Innere der Lagerhülse 2 erstreckt. Das Joch 7 ruht mit Hilfe einer kugeligen Büchse 8, die eine Abstützfläche 8a aufweist, gelenkig in dem Kragstück 4a des Abstützbocks 4. Eine Lippendichtung 9 dichtet den Spalt zwischen Joch 7 und Abstützbock 4 nach aussen ab. Der Abstützbock 4 ist auf einem beweglichen Lagerhebel oder auf einem Gestell 10 befestigt.

Zwischen dem Mantel 1 und dem Joch 7 ist eine halbringförmige Druckkammer 11 gebildet, welche durch Umfangs-Dichtungen 12 und durch einander gegenüberliegende Längs-Dichtungen 13 begrenzt ist. Dieser Druckkammer 11 kann über einen Kanal 14 Drucköl zugeführt werden. Dadurch wird auf den Mantel 1 eine Stützkraft aufgebracht, und zwar in Richtung auf die Gegenwalze 17. Die Länge der Druckkammer 11 (Haupt-Stützeinrichtung) ist nur geringfügig kleiner als die Länge BL der Presszone. In den beiden ausserhalb der Presszone BL befindlichen Bereichen des Walzenmantels 1 sind zusätzliche Stützeinrichtungen in Form von hydrostatischen Druckschuhen 15 und 16 vorgesehen. Deren Achsen liegen in der Pressebene (die mit der Zeichenebene zusammenfällt). Sie können durch Zufuhr von Drucköl über die Leitungen 15a bzw. 16a aktiviert werden. Der eine Druckschuh 15 wirkt in Richtung zur Gegenwalze 17, der andere entgegengesetzt. Dadurch kann den Enden des Walzenmantels 1 bei Bedarf eine zusätzliche, gezielte Verbiegung aufgezwungen werden. Anstelle der hydrostatischen Druckschuhe 15 und 16 können auch halbringförmige Zusatz-Druckkammern vorgesehen werden, ähnlich der Haupt-Druckkammer 11.

Mit m ist die zur Walzendrehachse senkrechte Mittelebene des Lagers 20 der Gegenwalze bezeichnet. Die Entfernung von dieser Mittelebene zu der Mittelebene des am anderen Walzenende befindlichen Lagers ist die sogenannte Lagerentfernung LE. An beiden Walzenenden fallen die Mittelebenen des Lagers 20 und des Pendellagers 3 zusammen; d.h. die Lagerentfernungen sind gleich. Die gleiche Grösse hat auch die «Lagerentfernung» der Abstützflächen 8a des Jochs 7.

In Fig. 2 ist wiederum an einen rotierenden Walzenmantel 21 eine Lagerhülse 22 angeflanscht, welche über ein Pendelrollenlager 23 am Abstützbock 24 angelenkt ist. Nunmehr ist das Pendelrollenlager 23 jedoch im Inneren der Lagerhülse 22 angeordnet; es ruht mit seinem Innenring auf dem Kragstück 24a des Abstützbockes 24. Ein Lagerdeckel 25 mit Lippendichtung 26 schliesst den Ölraum des Lagers 23 nach aussen ab. Das Joch 27 stützt sich wie in Fig. 1 über den kugeligen Ring 8 am Abstützbock 24 ab. Im Joch 27 sind nunmehr hydrostatische Druckschuhe 18, auch «Stützkolben» genannt, vorgesehen, die von innen den Walzenmantel 21 stützen. Die Presswalze weist eine Mehrzahl solcher Druckschuhe 18 auf, die in der Pressebene aufgereiht sind (Haupt-Stützeinrichtung). Zusätzliche hydrostatische Druckschuhe 15 und/oder 16, die wiederum ausserhalb der Presszone BL angeordnet sind, können so mit Druck beaufschlagt werden, dass eine gewollte Verbindung des Walzenmantels 21 erzwungen wird.

Die Fig. 3 zeigt ein Ausführungsbeispiel mit Antriebseinrichtung und mit halbringförmiger Druckkammer 11 (entsprechend Fig. 1) jedoch ohne Zusatz-Stützeinrichtung. Man könnte allerdings auch hier bei Bedarf eine solche Zusatz-Stützeinrichtung vorsehen. Mit dem Walzenmantel 51 ist eine Lagerhülse 52 und mit diesem ein Zahnkranz 47 verschraubt. Der in dieser Weise verlängerte Walzenmantel ist wieder mit einem Pendelrollenlager 53 auf dem Kragstück 54a des Abstützbocks 54 gelagert. Das Joch 57 ist wieder über die Kugelhülse 58 gelenkig mit dem Kragstück 54a verbunden. Eine Lippendichtung 59 dichtet den Spalt zwischen dem Abstützbock 54 und einer auf das Joch 57 aufgeschobenen Hülse 60 ab. Ein Federring 61 hält über die Hülse 60 die Kugelhülse 58 axial fest (Festlager). Der Abstützbock 54 ist auf einem Anpresshebel, Anpresskolben oder Gestell 10 befestigt. Das Lager 53 ist über einen Stützring 62 und einen Federring 63 gegen axiale Verschiebung gegenüber dem Abstützbock 54 gesichert. Andererseits ist der Zahnkranz 47 über Stützring 64 und Federring 65 gegenüber dem Lager 53 gegen Verschiebung gesichert (Festlager).

Eine Nase 66, welche am Abstützbock 54 befestigt ist, ragt in eine Nute 67 des Jochs 57 hinein und sichert dieses gegen Verdrehung. In den Fig. 1 und 2 ist eine solche Verdrehsicherung weggelassen.

Eine Antriebswelle 68 mit Passfeder 69 wird über eine nicht gezeigte Gelenkwelle angetrieben. Die Antriebswelle 68 ist in einem sphärischen Lager 30 gelagert und mit Lippendichtung 31 in einem Deckel 32 abgedichtet. Das Lager 30 und der Deckel 32 ruhen in einem Lagerschild 30a, das an den Abstützbock 54 angeschraubt ist. Die Welle 68 treibt über eine winkelig einstellbare Zahnkupplung 33 ein Antriebsritzel 34 an, welches mit dem Zahnkranz 47 kämmt. Im Zentrum des Antriebsritzels 34 ist ein sphärisches Lager 35 vorgesehen. Mit diesem ist es schwenkbar auf einem Haltebolzen 36 gelagert, der mittels eines angeformten Bundes 37 und einer Schraube 38 starr am Abstützbock 54 befestigt ist. Wenn sich beim Betrieb der Presswalze der Walzenmantel 51 durchbiegt und sich der Zahnkranz 47 dementsprechend neigt, dann kann sich das Ritzel 34 dieser Neigung ohne Schwierigkeiten anpassen.

Das Lager 35 ist einerseits durch einen Federring 39 im Ritzel 34 axial gehalten, und andererseits durch einen Haltering 40 und einen Federring 41 am Haltebolzen 36. Der Abstützbock 54 ist zugleich Getriebegehäuse für die Zahnräder 34 und 47. Im Bereich der Lagerhülse 52 ist das Innere des Getriebegehäuses 54 mittels Deckel 55 und Lippendichtung 56 nach aussen abgedichtet.

Eine Gegenwalze und deren Lagerung sind in gleicher Weise wie in Fig. 2 angeordnet, in Fig. 3 jedoch nicht sichtbar.

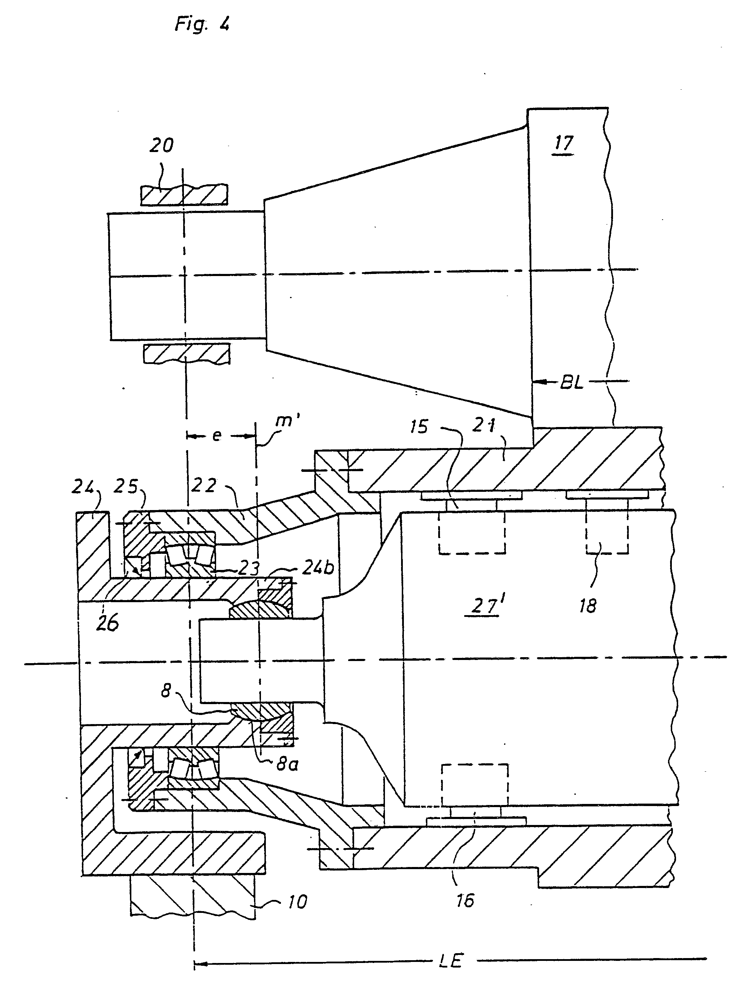

In Fig. 4 sind alle gegenüber der Ausführungsform von Fig. 2 unveränderten Bauteile mit den gleichen Bezugszeichen versehen wie dort. Ein Unterschied besteht im wesentlichen nur darin, dass das Kragstück 24b um das Mass e in das Innere des Walzenmantels 21, 22 verlängert ist, und dass dementsprechend das Joch 27' kürzer ausgeführt werden kann.

## Patentansprüche

1. Presswalze, deren Durchbiegung einstellbar ist, insbesondere für die Papierindustrie, mit einem hohlen Walzenmantel (1), der um einen feststehenden Biegeträger (Joch 7) rotierbar ist und der mit einer Gegenwalze (17) einen von einer Bahn durchlaufenen Pressspalt bilden kann, wobei die Drehachsen der beiden Walzen und der Pressspalt in einer Pressebene liegen, ferner mit den folgenden Merkmalen:
a) der Walzenmantel (1) ist an seinen beiden Enden durch je ein Pendellager (3) wenigstens mittelbar gegen das Joch (7) abgestützt;
b) im Inneren des Walzenmantels (1) befindet sich eine hydraulische Stützeinrichtung (11), die in der Pressebene Stützkräfte vom Joch (7) auf den Walzenmantel (1) überträgt;
c) das Joch (7) ruht an seinen beiden Enden mit je einer Abstützfläche (8a) auf zwei Abstützböcken (4);
d) im Längsschnitt gesehen ist die Entfernung zwischen den zur Walzendrehachse senkrechten Mittelebenen (m) der Abstützflächen (8a) des Jochs (7) wenigstens angenähert gleich gross wie die Entfernung (LE) zwischen den Lagern (20) der Gegenwalze (17);
dadurch gekennzeichnet,

e) dass die Entfernung zwischenden Pendellagern (3) des Walzenmantels (1) wenigstens angenähert gleich der Entfernung (LE) zwischen den Lagern (20) der Gegenwalze (17) ist und
f) dass sich an jedem Walzenende die Abstützfläche (8a) für das Joch (7) an einem sich vom Abstützbock (4) in das Innere des Walzenmantels (1) erstreckenden Kragstück (4a) befindet.

2. Presswalze, deren Durchbiegung einstellbar ist, insbesondere für die Papierindustrie, mit einem hohlen Walzenmantel (21), der um einen feststehenden Biegeträger(Joch 27')rotierbar ist und der mit einer Gegenwalze (17) einen von einer Bahn durchlaufenen Pressspalt bilden kann, wobei die Drehachsen der beiden Walzen und der Pressspalt in einer Pressebene liegen, ferner mit den folgenden Merkmalen:
a) der Walzenmantel (21) ist an seinen beiden Enden durch je ein Pendellager(23) wenigstens mittelbar gegen das Joch (27') abgestützt;
b) im Inneren des Walzenmantels (21) befindet sich eine hydraulische Stützeinrichtung (18), die in der Pressebene Stützkräfte vom Joch (27') auf den Walzenmantel (21) überträgt;
c) das Joch (27') ruht an seinen beiden Enden mit je einer Abstützfläche (8a) auf zwei Abstützböcken (24);
dadurch gekennzeichnet,
d) dass die Entfernung zwischen den Pendellagern (23) des Walzenmantels (21) wenigstens angenähert gleich der Entfernung (LE) zwischen den Lagern (20) der Gegenwalze (17) ist;
e) dass sich an jedem Walzenende die Abstützfläche (8a) für das Joch (27') an einem sich vom Abstützbock (24) in das Innere des Walzenmantels (21) erstreckenden Kragstück (24b) befindet
f) und dass die Entfernung zwischen den Mittelebenen (m') der beiden Abstützflächen (8a) des Jochs (27') kleiner ist als die Entfernung (LE) zwischen den Lagern der Gegenwalze (Fig. 4).

3. Presswalze nach Anspruch 1, worin das Joch (7) kugelige Abstützflächen (8a) aufweist, dadurch gekennzeichnet, dass an jedem Walzenende die kugelige Abstützfläche (8a) und das Pendellager (3) des Walzenmantels (1) wenigstens angenähert denselben Mittelpunkt haben.

4. Presswalze nach einen der Ansprüche 1 bis 3, dadurch gekennzeichnet, dass das zum Abstützbock (4; 24) gehörende Kragstück (4a; 24a) rohrförmig ist und zwischen den Walzenmantel (1,2; 21,22) und das Joch (7; 27) hineinragt.

5. Presswalze nach einem der Ansprüche 1 bis 4, dadurch gekennzeichnet, dass an jedem Walzenende das Pendellager (3; 23; 53) des Walzenmantels (1; 21; 51) unmittelbar auf dem Abstützbock (4; 24; 54) ruht.

6. Presswalze nach Anspruch 4, worin die Pendellager (23; 53) im Inneren des Walzenmantels (21, 22; 51, 52, 47) angeordnet sind, dadurch gekennzeichnet, dass das Kragstück (24a; 54a) auf seiner Aussenseite das Pendellager (23; 53) und auf seiner Innenseite das Joch 27; 57) trägt (Fig. 2 oder 3).

7. Presswalze nach Anspruch 6, dadurch gekennzeichnet, dass der Walzenmantel (51, 52, 47) im Bereich des einen der beiden Pendellager (53) einen Aussen-Zahnkranz (47) aufweist, mit welchem ein pendelnd gelagertes Antriebsritzel (34) kämmt.

8. Presswalze nach Anspruch 7, dadurch gekennzeichnet, dass das Antriebsritzel (34) auf einem einzigen in seinem Inneren angeordneten Pendellager (35) gelagert ist, das seinerseits auf einem am Abstützbock (54) starr befestigten Tragbolzen (36) ruht, und dass das Antriebsritzel (34) mittels einer Gelenkkupplung (33) mit einem Antriebselement (Welle 68) verbunden ist.

9. Presswalze nach einem der Ansprüche 1 bis 8, dadurch gekennzeichnet, dass an jedem Ende des Walzenmantels (1; 21) zwischen der hydraulischen Stützeinrichtung (11; 18) und dem Pendellager (3; 23) sowie zwischen dem Joch (7; 27) und den Walzenmantel (1; 21) wenigstens eine zusätzliche hydraulische Stützeinrichtung (15 und/oder 16) vorhanden ist, die unabhängig von der zuerst genannten Stützeinrichtung (11; 18) mit Druckmittel beaufschlagbar ist (Fig. 1 oder 2).

10. Presswalze nach Anspruch 9, dadurch gekennzeichnet, dass die zusätzlichen hydraulischen Stützeinrichtungen halbringförmige Druckkammern sind, die sich zwischen dem Joch und dem Walzenmantel befinden und die durch symmetrisch zur Pressebene angeordnete Längsdichtungen sowie durch Umfangsdichtungen begrenzt sind.

11. Presswalze nach Anspruch 9 oder 10, dadurch gekennzeichnet, dass eine am einen Walzenende angeordnete zusätzliche Stützeinrichtung (15, 16) unabhängig von einer am anderen Walzenende angeordneten zusätzlichen Stützeinrichtung mit Druck beaufschlagbar ist.

12. Presswalze nach einem der Ansprüche 9 bis 11, dadurch gekennzeichnet, dass die von den zusätzlichen Stützeinrichtungen (15) erzeugten Stützkräfte zur Gegenwalze (17) hin gerichtet sind.

13. Presswalze nach einem der Ansprüche 9 bis 11, dadurch gekennzeichnet, dass die von den zusätzlichen Stützeinrichtungen (16) erzeugten Stützkräfte von der Gegenwalze (17) weg gerichtet sind.

14. Presswalze nach einem der Ansprüche 9 bis 11, dadurch gekennzeichnet, dass an jedem Walzenende zwei zusätzliche Stützeinrichtungen (15 und 16) vorgesehen sind, deren in der Pressebene liegenden Wirkrichtungen einander entgegengesetzt sind.

## Claims

1. Press roll with adjustable deflection means, especially intended for use in the paper industry, with a hollow roll shell (1) that can rotate around a fixed flexible beam (yoke 7) and, in conjunction with a mating roll (17), forms a press nip for a web of paper to travel through, with the axis of rotation of both rolls and the press nip lying in a press plane, and with the following additional characteristics:
a) each end of the roll shell (1) is supported at least indirectly against the yoke (7) by a self-aligning bearing (3);
b) there is a hydraulic support (11) in the interior of the roll shell (1) that transfers support forces from the yoke (7) to the roll shell (1) along the press plane;

c) each end of the yoke (7) rests via a support area (8a) on a support cap (4);
d) seen in a longitudinal section, the distance between the center planes (m) of the support areas (8a) of the yoke (7), said planes being perpendicular to the axis of rotation of the roll, is at least approximately as long as the distance (LE) between the bearings (20) of the mating roll (17);
characterized in
e) that the distance between the self-aligning bearings (3) of the roll shell (1) is at least approximately equal to the distance (LE) between the bearings (20) of the mating roll (17) and
f) that the support area (8a) of the yoke (7) at each end of the roll is situated on a collar (4a) that extends from the support cap (4) into the interior of the roll shell (1).

2. Press roll with adjustable deflection means, especially intended for use in the paper industry, with a hollow roll shell (21), that can rotate around a fixed flexible beam (yoke 27') and, in conjunction with a mating roll (17), forms a press nip for a web of paper to travel through, with the axis of rotation of both rolls and the press nip lying in a press plane, and with the following additional characteristics:
a) each end of the roll shell (21) is supported at least indirectly against the yoke (27') by a self-aligning bearing (23);
b) there is a hydraulic support (18) in the interior of the roll shell (21) that transfers support forces from the yoke (27') to the shell (21) along the press plane;
c) each end of the yoke (27') rests via a support area (8a) on a support cap (24);
characterized in
d) that the distance between the self-aligning bearings (23) of the roll shell (21) is at least approximately equal to the distance (LE) between the bearings (20) of the mating roll (17);
e) that the support area (8a) of the yoke (27') at each end of the roll is situated on a collar (24b) that extends from the support cap (24) into the interior of the roll shell (21) and
f) that the distance between the center planes (m') of the two support areas (8a) of the yoke (27') is shorter than the distance (LE) between the bearings (20) of the mating roll (Fig. 4).

3. Press roll as in claim 1, with the yoke (7) having spherical support areas (8a), characterized in that the spherical support area (8a) and the self-aligning bearing (3) of the roll shell (1) at each end of the roll have at least approximately the same midpoint.

4. Press roll as in one of claims 1 through 3, characterized in that the collar (4a; 24a) associated with the support cap (4; 24) is tubular and extends between the roll shell (1, 2; 21, 22) and the yoke (7; 27).

5. Press roll as in one of claims 1 through 4, characterized in that the self-aligning bearing (3; 23; 53) of the roll shell (1; 21; 51) at each end of the roll rests directly on the support cap (4; 24; 54).

6. Press roll as in claim 4, with the self-aligning bearings (23; 53) being arranged inside the roll shell (21, 22; 51, 52, 47), characterized in that the outside of the collar (24a; 54a) carries the self-aligning

7

bearing (23; 53) and the inside carries the yoke (27; 57) (Fig. 2 or 3).

7. Press roll as in claim 6, characterized by an outer crown gear (47) that is near one of the two self-aligning bearings (53) on the roll shell (51, 52, 47) and that engages with a drive pinion (34) that is mounted so as to pivot.

8. Press roll as in claim 7, characterized in that the drive pinion (34) is mounted on a single self-aligning bearing (35) inside it that rests on a supporting bolt (36) rigidly fastened to the support cap (54) and in that the drive pinion (34) is connected to a drive element (shaft 68) by an articulated coupling (33).

9. Press roll as in one of claims 1 through 8, characterized by at least one supplemental hydraulic support (15 and/or 16) that is positioned on each end of the roll shell (1; 21) between the hydraulic support (11; 18) and the self-aligning bearing(3; 23); as well as between the yoke (7; 27) and the roll shell (1; 21) and that can be supplied with pressure medium independently of the first-mentioned support (11; 18) (Fig. 1 or 2).

10. Press roll as in claim 9, characterized in that the supplemental hydraulic supports are semiannular pressure compartments between the yoke and the roll shell bordered by longitudinal seals symmetrical to the press plane and by peripheral seals.

11. Press roll as in one of claims 9 or 10, characterized in that a supplemental support (15, 16) being arranged on the one end of the roll can be pressurized independently of a supplemental support being arranged on the other end of the roll.

12. Press roll as in one of claims 9 through 11, characterized in that the support forces produced by the supplemental supports (15) are directed toward the mating roll (17).

13. Press roll as in one of claims 9 through 11, characterized in that the support forces produced by the supplemental supports (16) are directed away from the mating roll (17).

14. Press roll as in one of claims 9 through 11, characterized by two supplemental supports (15,16) at each end of the press roll with directions of action lying in the press plane and opposing each other.

**Revendications**

1. Cylindre presseur dont la flexion est réglable, notamment pour l'industrie du papier, avec une enveloppe de cylindre creuse (1) susceptible de tourner autour d'un support de flexion fixe (armature 7) et qui peut délimiter avec un cylindre antagoniste (17) un intervalle de pressage à travers lequel passe une feuille continue, les axes de rotation des deux cylindres, ainsi que l'intervalle de pressage, se situant dans un plan de pressage, cylindre comportant en outre les particularités suivantes:
a) l'envelope (1) du cylindre prend appui à chacune de ses deux extrémités, par un palier à rotule (3), au moins indirectement contre l'armature (7),
b) à l'intérieur de l'enveloppe (1) du cylindre se trouve un dispositif hydraulique de soutien (11) qui transmet dans le plan de pressage des efforts de soutien de l'armature (7) sur l'enveloppe (1) du cylindre,

c) l'armature (7) repose à chacune de ses extrémités, par une surface d'appui (8a), sur une structure d'appui (4),
d) vue en coupe longitudinale, la distance entre les plans médians (m), perpendiculaires à l'axe de rotation du cylindre, des surfaces d'appui (8a) de l'armature (7) est au moins approximativement la même que la distance (LE) entre les paliers (20) du cylindre antagoniste (17),
cylindre caractérisé en ce que:
e) la distance entre les paliers à rotule (3) de l'enveloppe (1) du cylindre est au moins approximativement la même que la distance (LE) entre les paliers (20) du cylindre antagoniste (17),
f) à chaque extrémité du cylindre la surface d'appui (8a) pour l'armature (7) se trouve sur une partie de collerette (4a) s'étendant à partir de la structure d'appui (4) dans l'intérieur de l'enveloppe (1) du cylindre.

2. Cylindre presseur de flexion réglable, notamment pour l'industrie du papier, avec une enveloppe de cylindre creuse (21) susceptible de tourner autour d'un support de flexion fixe (armature 27') et qui peut délimiter avec un cylindre antagoniste (17) un intervalle de pressage à travers lequel passe une feuille continue, les axes de rotation des deux cylindres ainsi que l'intervalle de pressage se situant dans un plan de pressage, ce cylindre comportant en outre les particularités suivantes:
a) l'enveloppe (21) du cylindre prend appui à chacune de ses deux extrémités, par un palier à rotule (23), au moins indirectement sur l'armature (27').
b) à l'intérieur de l'enveloppe (21) du cylindre, se trouve un dispositif hydraulique de soutien (18) qui transmet dans le plan de pressage des efforts de soutien de l'armature (27') à l'enveloppe (21) du cylindre,
c) l'armature (27) repose à chacune de ses deux extrémités par une surface d'appui (8a) sur une structure d'appui (24),
cylindre caractérisé en ce que:
d) la distance entre les paliers à rotule (23) de l'enveloppe (21) du cylindre est au moins approximativement la même que la distance (LE) entre les paliers (20) du cylindre antagoniste (17),
e) à chaque extrémité du cylindre, la surface d'appui (8a) pour l'armature (27') se trouve sur une partie de collerette (24b) s'étendant à partir de la structure d'appui (24) dans l'intérieur de l'enveloppe (21) du cylindre,
f) la distance entre les plans médians (m') des deux surfaces d'appui (8a) de l'armature (27') est inférieure à la distance (LE) entre les paliers du cylindre antagoniste (figure 4).

3. Cylindre presseur selon la revendication 1, dans lequel l'armature (7) comporte des surfaces d'appui sphériques (8a), caractérisé en ce que, à chaque extrémité du cylindre, la surface d'appui sphérique (8a) et le palier à rotule (3) de l'enveloppe (1) du cylindre ont au moins approximativement le même centre.

2. Cylindre presseur selon une des revendications 1 à 3, caractérisé en ce que la partie de collerette (4a, 24a) appartenant à la structure d'appui (4, 24) est de forme tubulaire et pénètre entre l'enveloppe (1, 2; 21, 22) du cylindre et l'armature (7, 27).

5. Cylindre presseur selon une des revendications 1 à 4, caractérisé en ce que, à chaque extrémité du cylindre, le palier à rotule (3, 23, 53) de l'enveloppe (1, 21, 51) du cylindre repose directement sur la structure d'appui (4, 24, 54).

6. Cylindre presseur selon la revendication 4, dans lequel les paliers à rotule (23, 53) sont disposés à l'intérieur de l'enveloppe (21, 22; 51, 52, 47) du cylindre caractérisé en ce que la partie de collerette (24a, 54a) porte sur son côté externe le palier à rotule (23, 53) et sur son côté interne l'armature (27, 57) (figure 2 ou 3).

7. Cylindre presseur selon la revendication 6, caractérisé en ce que l'enveloppe (51, 52, 47) du cylindre comporte dans la zone de l'un des deux paliers à rotule (53) une couronne dentée externe (47) avec laquelle engrène un pignon d'entraînement (34) monté à rotule.

8. Cylindre presseur selon la revendication 7, caractérisé en ce que le pignon d'entraînement (34) est monté sur une unique palier à rotule (35) disposé à son intérieur et qui, de son côté, repose sur un axe porteur (36) solidaire de la structure d'appui (54), le pignon d'entraînement (34) étant relié par un accouplement articulé (33) avec un élément d'entraînement (arbre 68).

9. Cylindre presseur selon une des revendications 1 à 8, caractérisé en ce que, à chaque extrémité de l'enveloppe (1, 21) du cylindre, entre le dispositif hydraulique de soutien (11, 18) et le palier à rotule (3, 23), ainsi qu'entre l'armature (7, 27) et l'enveloppe (1, 21) du cylindre, il est prévu au moins un dispositif hydraulique de soutien supplémentaires (15 et/ou 16) qui est susceptible d'être sollicité par un fluide sous pression indépendamment du dispositif de soutien (11, 18) mentionné en premier lieu (figure 1 ou 2).

10. Cylindre presseur selon la revendication 9, caractérisé en ce que les dispositifs hydrauliques de soutien supplémentaires sont des chambres de pression en forme de demi cercle qui se trouve entre l'armature et l'enveloppe du cylindre et qui sont limitées par des bandes longitudinales d'étanchement disposée symétriquement par rapport au plan de pressage ainsi que par des bandes périphériques d'étanchement.

11. Cylindre presseur selon l'une des revendications 9 ou 10, caractérisé en ce qu'un dispositif supplémentaire de soutien (15, 16) disposé à une extrémité du cylindre, est susceptible d'être sollicité en pression indépendamment d'un autre dispositif supplémentaire de soutien disposé à l'autre extrémité du cylindre.

12. Cylindre presseur selon l'une des revendications 9 à 11, caractérisé en ce que les efforts de soutien engendrés par les dispositifs supplémentaires de soutien (15) sont dirigés vers le cylindre antagoniste (17).

13. Cylindre presseur selon l'une des revendications 9 à 11, caractérisé en ce que les efforts de soutien engendrés par les dispositifs supplémentaires de soutien (16) sont dirigés dans le sens opposé au cylindre antagoniste (17).

14. Cylindre presseur selon l'une des revendications 9 à 11, caractérisé en ce qu'à chaque extrémité du cylindre il est prévu deux dispositifs supplémentaires de soutien (15 et 16), dont les sens d'intervention dans le plan de pressage sont opposés l'un à l'autre.

Fig. 1

0 043 119

11

Fig. 2

0 043 119

13

Fig. 3

Fig. 4

17